# EUROPÄISCHE PATENTANMELDUNG

(11) **EP 1 256 272 A1**
(43) Veröffentlichungstag der Anmeldung: **13.11.2002**
(21) Anmeldenummer: 02007453.0
(22) Anmeldetag: 30.03.2002
(51) Int. Cl.: A01D 89/00, A01D 57/20

(54) **Erntegutaufnahmevorrichtung**

(30) Priorität: 05.04.2001 DE 10116982
(71) Anmelder: DEERE & COMPANY, Moline, Illinois 61265-8098 (US)
(72) Erfinder: Wolf, Helmut, 66482 Zweibrücken (DE)
(74) Vertreter: Holst, Sönke, Dr.

(57) **Zusammenfassung**

Die Erfindung bezieht sich auf eine Erntegutaufnahmevorrichtung (10), mit einer mit Zinken (40) ausgestatteten Aufnahmetrommel (38) und einem an der Rückseite der Aufnahmetrommel (38) angeordneten Querförderer, der eingerichtet ist, von der Aufnahmetrommel (38) aufgenommenes Gut quer zur Vorwärtsbewegungsrichtung (V) zu fördern. Um den Antriebsenergiebedarf zu vermindern, wird vorgeschlagen, dass der Querförderer ein Gurtförderer (18, 20) ist.

Außerdem wird vorgeschlagen, dass die Aufnahmetrommel (38) an einem vorderen Teil (56) der Erntegutaufnahmeeinrichtung (10) und der Gurtförderer (16, 18, 20) an einem hinteren Teil der Erntegutaufnahmeeinrichtung (10) befestigt ist, wobei der vordere Teil (56) und der hintere Teil (54) an einer Trennstelle (36) lösbar miteinander verbunden sind. Dadurch kann am hinteren Teil (64) ein vorderer Teil (56), der eine von einer Aufnahmetrommel (38) verschiedene Gutaufnahmeeinrichtung aufweist, angebracht werden.

## Beschreibung

Die Erfindung betrifft eine Erntegutaufnahmevorrichtung, mit einer mit Zinken ausgestatteten Aufnahmetrommel und einem an der Rückseite der Aufnahmetrommel angeordneten Querförderer, der eingerichtet ist, von der Aufnahmetrommel aufgenommenes Gut quer zur Vorwärtsbewegungsrichtung zu fördern.

Die derzeit bekannten, zur Aufnahme von Heu eingerichteten Erntegutaufnahmevorrichtungen (so genannte Pick-Ups) für selbstfahrende oder gezogene bzw. angebaute Feldhäcksler bestehen im Wesentlichen aus einer Aufnahmetrommel und einer Querförderschnecke, die das Erntegut seitlich zu den Vorpresswalzen des Feldhäckslers transportiert. Dabei ist als nachteilig anzusehen, dass die Antriebsleistungsaufnahme der Querförderschnecke relativ groß ist und die der Aufnahmetrommel um ein Vielfaches übersteigt. Auch ist das Durchsatzvermögen der Erntegutaufnahmevorrichtung durch die Förderschnecke begrenzt.

Andererseits gibt es Schneidwerke als Vorsatzgeräte für Mähdrescher, die aus einer Schneideinrichtung (Mähbalken) und zwei symmetrisch zur Längsmittelebene in Fahrtrichtung dahinter angeordneten Fördergurten bestehen, die das Erntegut seitlich zu einem weiteren Fördergurt transportieren, von dem es dem Schrägförderer des Mähdreschers zugeführt wird.

Das der Erfindung zugrunde liegende Problem wird darin gesehen, eine Erntegutaufnahmevorrichtung bereitzustellen, deren Antriebsleistungsaufnahme vermindert und Durchsatzvermögen vergrößert ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt vor, die Querförderschnecke durch einen Gurtförderer zu ersetzen. Auf diese Weise erreicht man, dass Leistungsaufnahme der Erntegutaufnahmevorrichtung reduziert und die Durchsatzleistung erhöht wird. Durch den Wegfall der Querförderschnecke mit ihren Schneckenwindungen, Paddeln oder Fingern werden störende Einflüsse auf den Metalldetektor des Feldhäckslers vermieden.

Vorzugsweise finden an der erfindungsgemäßen Erntegutaufnahmevorrichtung drei Gurtförderer Verwendung. Zwei äußere Gurtförderer fördern das von der Aufnahmetrommel aufgenommene Erntegut zur Mitte der Erntegutaufnahmevorrichtung und geben es einem dritten Fördergurt auf, der das Erntegut nach hinten zu den Vorpresswalzen eines Feldhäckslers fördert. Der dritte Gurtförderer kann zur Verbesserung der Gutübergabe etwas tiefer als die äußeren Gurtförderer liegen. An seiner Stelle kann auch ein beliebiger anderer Förderer Verwendung finden, z. B. ein Walzenförderer.

In einer bevorzugten Ausführungsform der Erfindung ist die Aufnahmetrommel an einem vorderen Teil der Erntegutaufnahmevorrichtung und der (bzw. die) Gurtförderer an einem hinteren Teil der Erntegutaufnahmeeinrichtung befestigt, wobei der vordere Teil und der hintere Teil an einer Trennstelle lösbar miteinander verbunden sind. Durch diese Aufteilung der Erntegutaufnahmevorrichtung in eine mit dem Gurtförderer ausgestattete Grundeinheit und einen abnehmbaren Anbauteil kann die Erntegutaufnahmevorrichtung multifunktionell genutzt werden, da es möglich wird, die Aufnahmetrommel durch eine andere Erntegutaufnahmeeinrichtung zu ersetzen, wie beispielsweise einen Mähwerksbalken oder eine Mähwerk mit rotierenden Mähscheiben. Da die Gras- und die Ganzpflanzensilage üblicherweise zu unterschiedlichen Zeiten stattfinden, ist ein problemloser ,Umbau der Erntegutaufnahmevorrichtung, von einer Pick-Up in ein Grüngutschneidwerk möglich. Anzumerken ist, dass die Kombinierbarkeit von einem vorderen Teil mit einer Gutaufnahmeeinrichtung und einem hinteren Teil mit einer Querfördereinrichtung mit beliebigen vorderen und hinteren Teilen möglich und nicht auf die genannten Teile beschränkt ist.

In den Zeichnungen sind drei nachfolgend näher beschriebene Ausführungsbeispiele der Erfindung dargestellt. Es zeigt:
- Fig. 1: eine Draufsicht auf eine erste Ausführungsform einer Erntegutaufnahmeinrichtung in Form einer Pick-Up;
- Fig. 2: einen Querschnitt durch die Erntegutaufnahmeeinrichtung der Figur 1 entlang der Linie A-A;
- Fig. 3: eine Draufsicht auf eine zweite Ausführungsform einer Erntegutaufnahmeeinrichtung in Form eines Schneidwerks;
- Fig. 4: einen Querschnitt durch die Erntegutaufnahmeeinrichtung der Figur 3 entlang der Linie B-B;
- Fig. 5: eine Draufsicht auf eine dritte Ausführungsform einer Erntegutaufnahmeeinrichtung in Form eines Mähwerks.

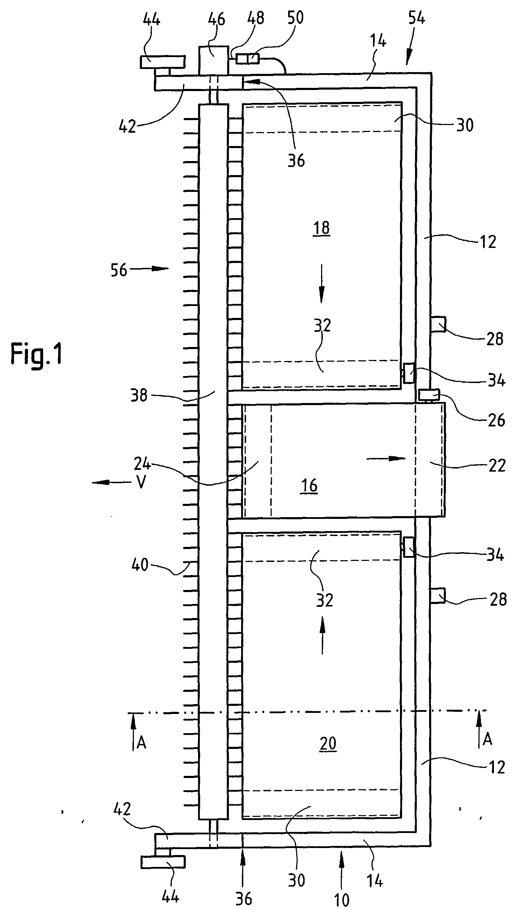

In Figur 1 ist eine Erntegutaufnahmeeinrichtung 10 in der Art einer so genannten Pick-Up dargestellt. Die Erntegutaufnahmeeinrichtung 10 weist einen Rahmen mit einem rückseitigen, sich quer zur Vorwärtsbewegungsrichtung V erstreckenden Querträger 12 auf, an dessen Außenenden sich nach vorn erstreckende Längsträger 14 befestigt sind.

Am Rahmen stützen sich drei Gurtförderer 16, 18 und 20 ab. Ein erster Gurtförderer 16 ist mittig an der Erntegutaufnahmeeinrichtung 10 befestigt und umfasst einen endlosen Fördergurt, der um Walzen 22, 24 umläuft, von denen eine durch einen Motor 26 in Rotation versetzbar ist. Der erste Gurtförderer 16 fördert auf ihm liegendes Gut entgegen der Vorwärtsbewegungsrichtung V nach hinten zu einer in der Zeichnung nicht wiedergegebenen Erntemaschine, in der es weiterverarbeitet wird. Die Erntemaschine wird durch an sich bekannte Befestigungselemente 28 mit der Erntegutaufnahmeeinrichtung 10 verbunden.

Der zweite Gurtförderer 18 und der dritte Gurtförderer 20 sind zueinander symmetrisch angeordnet und fördern auf ihnen liegendes Gut zur Mitte der Erntegutaufnahmeeinrichtung 10. Dort wird es vom ersten Gurtförderer 16 nach hinten zur Erntemaschine abtransportiert. Die Gurtförderer 18 und 20 weisen endlose Fördergurte auf, die um Walzen 30 und 32 umlaufen, wobei Einrichtungen zum Straffen der Fördergurte vorgesehen sein können. Die Walzen 22, 24, 30 und 32 stützen sich, gegebenenfalls über in der Zeichnung nicht wiedergegebene Streben, am Rahmen ab. Die Walzen 32 werden durch Motore 34 in Rotation versetzt. Die Motore 26 und 34 sind Elektro- oder Hydraulikmotore, die von der Erntemaschine aus mit Antriebsenergie beaufschlagt werden. Durch derartige Motore 26, 34 mit einstellbarer, variabler Geschwindigkeit ist eine exakte Anpassung der Fördergeschwindigkeit an die Einzugsgeschwindigkeit der Erntemaschine möglich. Es können in den Versorgungsleitungen der Motore 26 und 34 manuell oder automatisch lösbare Kupplungen zwischen Erntemaschine und Erntegutaufnahmeeinrichtung 10 vorgesehen sein. Der Aufbau der Gurtförderer 16, 18 und 20 entspricht im wesentlichen dem von Schneidwerken mit Fördergurten, wie sie in der EP 1 055 362 A beschrieben sind, deren Offenbarung durch Verweis hier aufgenommen wird. Sie bilden einen rückwärtigen Teil 54 der Erntegutaufnahmeeinrichtung 10.

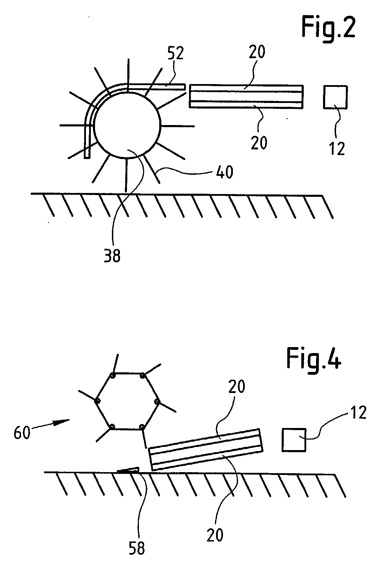

Am vorderen Ende der Längsträger 14 ist jeweils eine Trennstelle 36 vorgesehen, an der ein vorderer Teil 56 der Erntegutaufnahmeeinrichtung 10 mit einer Aufnahmetrommel 38 lösbar befestigt ist. Die mit Förderzinken 40 ausgestattete Aufnahmetrommel 38 ist an Halteelementen 42 drehbar gelagert, welche an der jeweils benachbarten Trennstelle 36 mit je einem der Längsträger 14 verbunden sind. Dazu kann an der Trennstelle 36 beispielsweise eine mit Federbolzen gesicherte Steckverbindung oder eine Schraubverbindung vorgesehen sein. An den vorderen Enden der Halteelemente 42 sind Räder 44 drehbar abgestützt. Ein elektrisch oder hydraulisch betriebener Motor 46, der eingerichtet ist, die Aufnahmetrommel 38 in Drehung zu versetzen, wird über eine Leitung 48 von der Erntemaschine aus mit Antriebsenergie versorgt. In der Nähe der Trennstelle 36 ist in der Leitung 48 eine trennbare Kupplung 50 vorgesehen. Oberhalb der Aufnahmetrommel 38 ist ein Blech 52 angeordnet, das in der Figur 2 dargestellt ist, aber in Figur 1 aus Gründen der Übersichtlichkeit weggelassen wurde. Die Zinken 40 können starr an der Aufnahmetrommel 38 befestigt (s. DE 100 21 748 A) oder gesteuert sein (s. DE 100 42 499 A).

Die Aufnahmetrommel 38 bildet im Zusammenwirken mit den Gurtförderern 16, 18, 20 eine Erntegutaufnahmeeinrichtung 10 in Form einer Pick-Up, wobei die Gurtförderer 16, 18 und 20 anstelle eines Schneckenförderer zum transversalen Fördern des Guts vorgesehen sind. Die Erntegutaufnahmeeinrichtung 10 gemäß Figur 1 eignet sich beispielsweise zum Aufnehmen gemähten Grases.

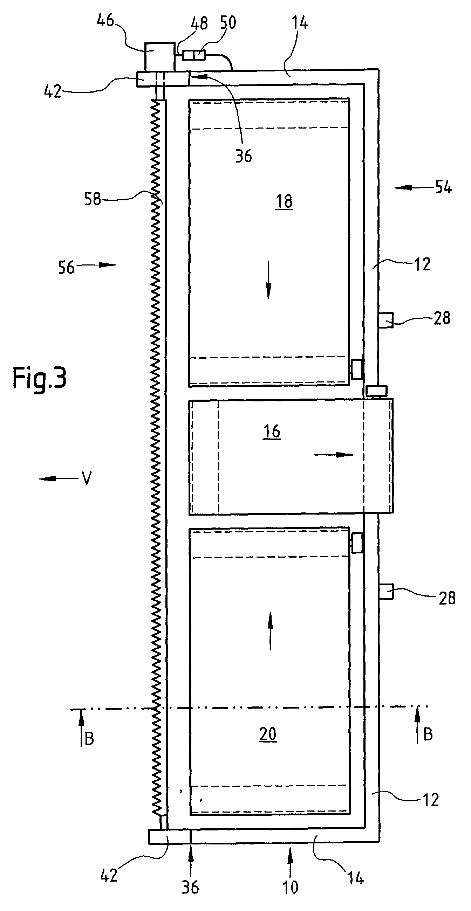

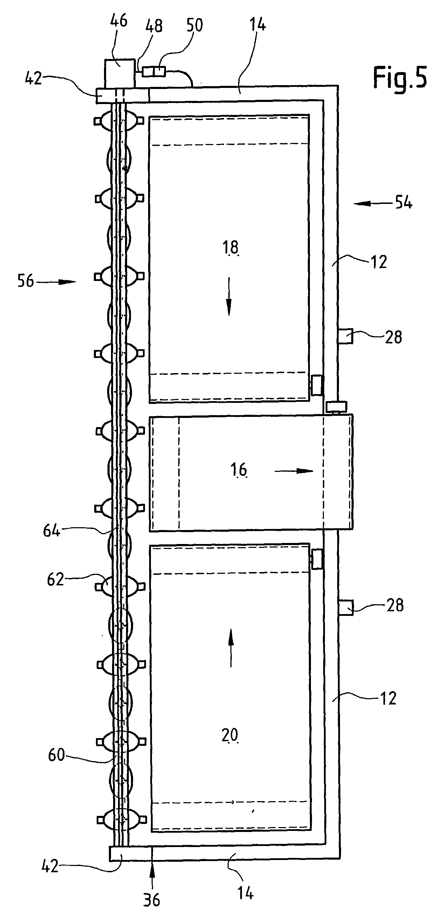

Die Trennstellen 36 und die Kupplung 50 ermöglichen, den vorderen Teil 56 der Erntegutaufnahmeeinrichtung 10 vom rückwärtigen Teil 54 zu trennen und durch einen anderen vorderen Teil zu ersetzen. In den Figuren 3 und 4 ist ein vorderer Teil 56 mit einem Mähwerksbalken 58 am rückwärtigen Teil 54 angebracht. Der Mähwerksbalken 58 weist Messer auf, die durch einen Motor 46 linear hin- und herbewegt werden. Der hydraulisch oder elektrisch betriebene Motor 46 wird über eine Leitung 48, in die eine Kupplung 50 eingeschleift ist, vom Erntefahrzeug her mit Energie versorgt. Anhand des in Figur 4 gezeigten Querschnitts ist erkennbar, dass oberhalb des Mähwerksbalkens 58 eine mit dem vorderen Teil 56 verbundene Haspel 60 mit Zinken angeordnet ist, welche in Figur 3 aus Gründen der Übersichtlichkeit nicht mit eingezeichnet ist. Im Vergleich mit der Figur 2 ist aus Figur 4 ersichtlich, dass der rückwärtige Teil 54 mit dem Querträger 12 und den Gurtförderern 16, 18 und 20 nach unten abgesenkt und nach vorn geneigt ist, um der fehlenden Höhenförderung der Aufnahmetrommel 38 Rechnung zu tragen. Die hierzu erforderliche Bewegung des rückwärtigen Teils 54 wird in der Regel durch die Erntemaschine, die die Erntegutaufnahmeeinrichtung 10 trägt, bereitgestellt.

In Figur 5 ist ein vorderer Teil 56 mit einer Vielzahl von Mähscheiben 62 dargestellt, die seitlich nebeneinander an einem quer verlaufenden Träger 60 befestigt sind. Die Mähscheiben 62 werden mittels einer Welle 64 rotativ angetrieben, die durch einen Motor 46 in Drehung versetzt wird. Der Motor 46 wird durch eine Leitung 48, in die eine auftrennbare Kupplung 50 eingeschleift ist, von einer an den Befestigungselementen 28 angekoppelten Erntemaschine aus mit Energie versorgt. Bei den Mähscheiben 62 kann es sich um flache Ausführungsformen handeln, bei denen der Träger 60 in geringer Höhe über dem Erdboden angeordnet ist. Alternativ kommen Trommelmähelemente zur Anwendung, bei denen ein Zylinder mit vertikaler Achse zwischen den Schneidscheiben und dem Träger 60 vorgesehen und der Träger in größerem Abstand über dem Erdboden angeordnet ist.

## Patentansprüche

1. Erntegutaufnahmevorrichtung (10), mit einer mit Zinken (40) ausgestatteten Aufnahmetrommel (38) und einem an der Rückseite der Aufnahmetrommel (38) angeordneten Querförderer, der eingerichtet ist, von der Aufnahmetrommel (38) aufgenommenes Gut quer zur Vorwärtsbewegungsrichtung (V) zu fördern, **dadurch gekennzeichnet, dass** der Querförderer ein Gurtförderer (18, 20) ist.

2. Erntegutaufnahmeeinrichtung (10) nach Anspruch 1, **dadurch gekennzeichnet, dass** der Gurtförderer (18, 20) eingerichtet ist, von der Aufnahmetrommel (38) aufgenommenes Gut in Richtung auf die Mitte der Erntegutaufnahmevorrichtung (10) zu fördern, wo es durch einen weiteren Gurtförderer (16) entgegen der Vorwärtsbewegungsrichtung (V) nach hinten abtransportiert wird.

3. Erntegutaufnahmeeinrichtung (10) nach Anspruch 1 oder 2, **dadurch gekennzeichnet, dass** die Aufnahmetrommel (38) an einem vorderen Teil (56) der Erntegutaufnahmeeinrichtung (10) und der Gurtförderer (16, 18, 20) an einem hinteren Teil der Erntegutaufnahmeeinrichtung (10) befestigt ist, wobei der vordere Teil (56) und der hintere Teil (54) an einer Trennstelle (36) lösbar miteinander verbunden sind.

4. Kombination aus einer Erntegutaufnahmeeinrichtung (10) nach Anspruch 3 und einem am hinteren Teil (54) anbringbaren vorderen Teil (56), der eine von einer Aufnahmetrommel (38) verschiedene Gutaufnahmeeinrichtung aufweist.

5. Kombination nach Anspruch 4, **dadurch gekennzeichnet, dass** die von einer Aufnahmetrommel (38) verschiedene Gutaufnahmeeinrichtung einen Mähwerksbalken (58) oder Mähscheiben (62) umfasst.
